(19)

Europäisches
Patentamt
European
Patent Office
Office européen
des brevets

(11) **EP 3 396 915 A1**

(12) **EUROPEAN PATENT APPLICATION**

(43) Date of publication:
**31.10.2018 Bulletin 2018/44**

(51) Int Cl.:
*H04L 27/34* $^{(2006.01)}$     *H04L 27/36* $^{(2006.01)}$

(21) Application number: **17305469.3**

(22) Date of filing: **27.04.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nokia Solutions and Networks Oy
02610 Espoo (FI)**

(72) Inventors:
• **ALMONACIL, Sylvain
91620 Nozay (FR)**
• **LAYEC, Patricia
91620 Nozay (FR)**

(74) Representative: **Mills, Julia et al
Script IP Limited
18 Bridge Street
Frome Somerset BA11 1BB (GB)**

(54) **PROCESSING COMMUNICATION SIGNALS TO ENHANCE TRANSMISSION**

(57)     Phase shift circuitry for applying a phase shift to a data signal prior to the signal being converted to an analogue signal and sent to a transmission system to be transmitted as an analogue communication signal, the data signal undergoing constellation mapping and pre-treatment prior to being converted to the analogue signal is disclosed. The phase shift circuitry comprises: an input for receiving the data signal, the data signal having undergone constellation mapping; determining logic operable to determine a global phase shift to be applied to the constellation mapped data signal to mitigate for any phase shift caused by the pre-treatment; and global phase shift circuitry configured to apply the determined global phase shift to the constellation mapped data signal.

FIG. 5

EP 3 396 915 A1

**Description**

FIELD OF THE INVENTION

The invention relates to the field of data communication and in particular to the processing of digital signals prior to converting them to analogue signals for transmission.

BACKGROUND

There are many techniques used to enhance the performance of data transmitters for transmitting signals along for example optical links. These include constellation mapping which modulates the digital signal by mapping the signal onto points in the complex plane. Carriers are then modulated with the real and imaginary components of the mapped signal thereby providing quadrature carriers. In optical signal links these carriers may be different polarisations of the optical field. Pre-treatments are also used on the digital signals to compensate for imperfections in the transmission system and thereby improve transmission performance. Each of these techniques provides some improvement in a particular aspect of the transmission performance, but they may also provide other unintended and possibly detrimental effects.

The reliance on digital signal processing (DSP) in these enhancement techniques requires conversion of the signals from the digital to the analogue domain at the transmitter side (Tx) prior to transmission. The DAC (digital to analogue converter) distorts the signal because of the finite resolution of the converter (given by the number N of coding bits) and its limited electronic bandwidth (BW). In particular a high peak to average power ratio PAPR of the signal being converted can limit the resolution and reduce performance.

It would be desirable to be able to reduce the peak to average power of a constellation mapped and pre-treated signal.

SUMMARY

A first aspect provides phase shift circuitry for applying a phase shift to a data signal prior to said signal being converted from a digital to an analogue signal and sent to a transmission system to be transmitted as an analogue communication signal, said data signal undergoing constellation mapping and pre-treatment prior to being converted to said analogue signal, said phase shift circuitry comprising: an input for receiving said data signal, said data signal having undergone constellation mapping; determining logic operable to determine a global phase shift to be applied to said constellation mapped data signal to mitigate for any phase shift caused by said pre-treatment; and global phase shift circuitry configured to apply said determined global phase shift to said constellation mapped data signal.

The inventors of the present invention recognised that although the pre-treatment of constellation mapped signals may improve transmission efficiency by addressing various transmission inefficiencies such as amplifier non-linearities and spectral bandwidth inefficiencies, the processing performed to address these issues may provide other effects on the signals. In particular, the constellation mapping is generally selected to provide a low peak to average power ratio PAPR of the mapped signal. However, pre-treatment may affect this and lead to increases in the PAPR value. The inventors of the present invention recognised not only that this may occur but also that it could be mitigated by providing a global phase shift, which phase shift is selected to compensate for the phase shift and corresponding increase in PAPR generated by the pre-treatment(s) and thereby reduce the maximum value of these signals.

In some embodiments, said constellation mapped data signal comprises both real and imaginary components and said determining logic is operable to determine an orientation of a constellation of said constellation mapped data signal in the complex plane that minimises a maximum value of both the real and imaginary components of said constellation following pre-treatment, and to determine a constellation phase rotation angle of said constellation to achieve said orientation as said global phase shift to be applied to said constellation mapped data signal.

The constellation mapping of the data maps the data to symbols in the complex plane, the real and imaginary components of which are used to modulate the communication signal. A constellation of the constellation mapped data signal is a complete set of the symbols in the complex plane that the data signal can be mapped to. This can be determined by sampling the data signal over a sufficient time for the full constellation to be represented. Once the full constellation is represented, then an orientation of this constellation that would minimise a maximum value of both the real and imaginary components of the constellation is determined and a corresponding angle of rotation of this constellation that would achieve this minimisation is found. It should be noted that it is the constellation of the mapped data after pre-treatment whose orientation is determined. The angle of rotation corresponds to the global phase shift to be applied to the signal. A global phase shift is a phase shift for the entire signal that is both the complex and imaginary parts.

In some embodiments, said determining logic is operable to: generate at least one rectangle in said complex plane containing said constellation; select one of said at least one rectangle with a smallest area; and determine said constellation phase rotation angle as an angle of rotation of said rectangle such that a maximum combined value of the real and imaginary components is minimised.

One way of determining the orientation of the constellation and from this, the desired phase shift to re-orientate it to reduce the maximum combined value of the components and thereby their PAPR, is to generate a rectangle or box that contains a constellation of the constellation mapped pre-treated data. The constellation of the pre-treated data can be fitted within a number of rectangles and the rectangle with the smallest area is selected and then a constellation phase rotation angle that would minimise a maximum combined value of the real and imaginary components is determined. The combined value of the real and imaginary components may be a simple sum of the two components. Alternatively they may be combined in a different way depending on the configuration of the rectangle and the circumstances.

In some embodiments, said step of generating and selecting said at least one rectangle is performed by computing the convex hull of points of said constellation and for each edge of said convex hull determining the rectangle comprising said edge and containing said points and selecting said rectangle with the smallest area using an oriented bounding box algorithm.

Use of an oriented bounded box algorithm in conjunction with a convex hull is a computationally simple of way of determining the minimum rectangle orientation that contains the constellation of points in the complex plane.

In some embodiments, said rectangle comprises a square, said data being mapped to points within a square in said complex plane, and determining said constellation phase rotation angle as an angle of rotation of said square is performed such that axes of said square align with axes of said complex plane.

Although in some embodiments the constellation may be fitted within a rectangle, it may be advantageous to fit it within a square and in which case, determining the orientation that provides the minimum value for the maximum of both the imaginary and real components is an orientation where the axes of the square align with the axes of the complex plane. It should be noted that for some rectangles that are very similar in shape to a square, this may also be the orientation that provides this minimum. It is only where a rectangle is elongated that a different orientation may be preferable. It should be noted that many constellation mappings do map to squares and also that as a square has the same maximum imaginary and real component it is advantageous when improving the performance of digital to analogue converters that have the same number of quantisation levels.

In some embodiments, said determining logic is operable to determine an updated global phase shift in response to detecting a change in at least one of said constellation mapping and said pre-treatment.

It should be noted that the global phase shift is dependent upon the pre-treatments that generate a phase shift within the signals and thereby increase the PAPR. It is also dependent upon the constellation mapping as different constellation mappings are affected differently by the pre-treatments. Thus, any change in constellation mapping or pre-treatment may require the device to be recalibrated and the global phase shift to be updated. In some cases, this is done automatically by the determining logic detecting that a change has occurred. Alternatively, a signal indicating a change may be sent from an operator, the signal indicating to the constellation mapping module, for example, that it is to use a different constellation mapping or to one of the pre-treatment modules that a different pre-treatment should be used. This signal can be forwarded to the determining logic and in response to detecting this signal the determining logic recognises that an update in the global phase shift is required. In some cases, when this signal is received then the determining step to determine the global phase shift will be performed again using in some cases the bounding box algorithm.

In some embodiments, said determining logic comprises a data store for storing a lookup table said lookup table comprising at least two sets of constellation mappings and associated pre-treatments along with the global phase shifts to be applied when said corresponding constellation mappings and associated pre-treatments are used.

Although the determination of the global phase shift may be performed by determining logic within the phase shift circuitry, in some embodiments, the determining logic comprises a data store storing a look-up table in which the calculated values for the global phase shift are stored alongside their corresponding constellation mapping and pre-treatments. In such a case, when the constellation mappings and/or pre-treatments are updated then the global phase shift is also updated by the determining logic looking up a new value from the lookup table. This can be done in response to a signal from the operator indicating not only that a change is to occur but also the nature of the change.

Where the determining logic comprises a look-up table, then this determining logic can be located either before or after the pre-treatment circuitry.

Although embodiments may be applied to any type of pre-treatment or combination of pre-treatments that may cause a phase shift to the constellation mapped data, in some cases said pre-treatment of said signal is to compensate for imperfections in said transmission system and comprises at least one of pre-distortion, chromatic dispersion pre-compensation or pre-dispersion, non-linear pre-compensation and pulse shaping of said signal.

A second aspect of the present invention provides data signal processing circuitry for processing data signals prior to said signals being sent to a transmission system to be transmitted as a digital communication signal, said data signal processing circuitry comprising: an input for receiving said data signal; constellation mapping circuitry for mapping said data signal to a constellation of points in a complex plane; pre-treatment circuitry for pre-treating said data signal to compensate for imperfections in said transmission system; phase shift circuitry according to a first aspect; and digital to analogue conversion circuitry.

Although the phase shift circuitry may be arranged anywhere between the constellation mapping and the digital to analogue converter, in some embodiments said phase shift circuitry is arranged to receive data that has been pre-treated by said pre-treatment circuitry.

Arranging the phase shift circuitry after the pre-treatment circuitry allows determining logic within it to determine the phase shift where appropriate. If the phase shift circuitry is arranged before the pre-treatment circuitry, then the phase shift to be applied must be calculated separately and provided to the phase shift circuitry perhaps in the form of look-up tables.

A third aspect of the present invention provides a method of determining a global phase shift to apply to a data signal prior to said data signal being converted from a digital to an analogue signal and sent to a transmission system for transmission as an analogue communication signal, said data signal undergoing constellation mapping and pre-treatment prior to transmission said method comprising: determining an orientation of a constellation of said constellation mapped data signal that minimises a maximum value of both real and imaginary components of said constellation mapped data following pre-treatment; and determining a constellation phase rotation angle of said constellation to achieve said orientation as said global phase shift to be applied to said constellation mapped data signal.

In some embodiments, said determining said orientation of said constellation mapped data signal comprises: generating at least one rectangle in a complex plane containing said constellation mapped pre-treated data; and selecting one of said at least one rectangles with a smallest area; and said step of determining said constellation phase rotation angle comprises determining an angle of rotation of said rectangle such that a maximum combined value of the real and imaginary components is minimised.

In some embodiments, said step of generating and selecting said at least one rectangle is performed by computing the convex hull of points of said data sample and for each edge of said convex hull determining the rectangle comprising said edge containing said points and selecting said box with the smallest area using an oriented bounding box algorithm.

In some embodiments, said rectangle comprises a square and said constellation mapped signal is mapped to points within a square in said complex plane and said step of determining said constellation phase rotation angle comprises determining an angle of rotation of said rectangle such that axes of said rectangle align with axes of said complex plane.

A fourth aspect of the present invention provides a computer program which when executed by a data processor is operable to control said data processor to form a method according to a third aspect to the present invention.

It should be noted that the steps of determining the global phases shift angle using perhaps a bounding box algorithm and a convex hull calculation may be performed by hardware circuitry that is configured to perform these calculations or they may be performed by software within a processor.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates the rotation of a data constellation and the effect this has on the maximum real and imaginary components;
Figure 2 shows the determination of rotation angle using the oriented bounded box algorithm;
Figure 3 shows a plurality of oriented bounded boxes that can be derived from a convex hull;
Figure 4 schematically shows a conventional transmitter and a transmitter according to an embodiment;
Figure 5 schematically shows a transmitter according to a further embodiment;
Figure 6 shows the signal to noise ratio improvements due to embodiments; and
Figure 7 schematically shows a transmitter according to a third embodiment.

DESCRIPTION OF THE EMBODIMENTS

Before discussing the embodiments in any more detail, first an overview will be provided.

It is proposed to reduce the PAPR of a communication signal by pre-rotating the constellation of the constellation mapped signal before or at the DAC input by applying a phase shift to the signal. This allows any increase in PAPR caused by pre-treatment or pre-compensation techniques implemented at the transmitter side such as pre-dispersion or nonlinear pre-distortion to be reduced. In effect phase shifts generated by these treatments are determined and compensated for.

The method can be applied to any constellation to reduce the PAPR on both the real and the imaginary components of the signal simultaneously.

In what follows, we use the definition of PAPR for centred (zero mean value) signals:

$$\text{PAPR} = (\text{squared maximum value})/\text{variance}$$

The method is implemented in two steps. In a first step the orientation of the constellation that minimizes the maximum value of both the real and imaginary component is found, and in the second step, the constellation is pre-rotated by a certain amount to achieve that orientation. Pre-rotation of the constellation is performed by applying a global phase shift of the determined rotational angle to the constellation mapped signal. It should be noted that this phase shift could be applied either before pre-treatment or after it. The required angle needs to be determined from an analysis of the pre-treated signals, but once it has been determined for a particular constellation mapping and pre-treatment(s) then the phase shift can be applied either before or after the pre-treatment.

It may be advantageous to apply the phase shift following pre-treatment as in this case the circuitry applying the phase shift can also be used to determine the required phase shift.

Due to symmetry considerations, the variance of the real and imaginary components of the constellation of the constellation mapped signal is equal for a square constellation, which simplifies this approach. For a near square constellation then the variance may be considered to be equal.

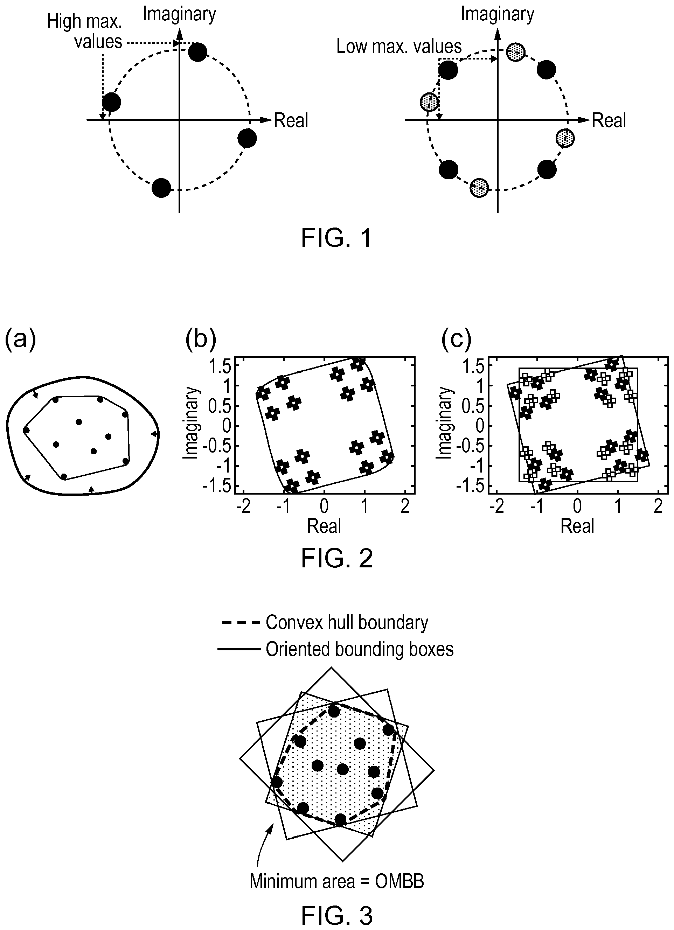

Figure 1 schematically illustrates the principle of the minimization of the PAPR by pre-rotating a data constellation. As can be seen and as is the case for all square constellations the variance of the real and imaginary components are identical. Only the maximum values evolve as the constellation rotates, this change driving the PAPR.

Figure 1 schematically shows a QPSK constellation with the vertices of the square in which the symbols are contained being shown. As can be seen from this when the edges of the square are parallel to the constellation plane axes then the maximum values of real and imaginary components are minimal. Thus, where they are not aligned with the axes a rotation to align them will reduce the maximum values of the real and imaginary components and thus the PAPR.

Although this is shown for a QPSK constellation this observation applies to any square constellation so that the following strategy is proposed to maximize or at least increase the transmitter signal to noise ratio SNR/Tx:

First the oriented square that contains the constellation is found and then its orientation (tilt or skew), denoted $\varphi$, with the constellation plane axes is computed.

The constellation is then rotated such that the containing square has no tilt with the constellation plane axes. This rotation corresponds to the application of a global phase shift to the field (comprised of the real and imaginary components).

The first step of the method may be done using a bounding box algorithm, in particular the oriented bounding box algorithm. The oriented bounding box algorithm is divided into three steps:

1.1    Compute the convex hull of the set of points constituting the constellation. Formally the convex hull of a set of point X is the smallest convex set containing X. An "elastic-band analogy" can be used to illustrate what the convex hull is: it is the convex set defined by an elastic band stretching around the constellation points, as depicted in Fig. 2a.

1.2    For each edge of the convex hull compute the oriented bounding box containing the constellation. The different oriented bounding boxes for an example convex hull are shown in Figure 3.

1.3    Choose the one with minimum area. This is also the one that gives the constellation orientation and the phase rotation $\varphi$ to apply for maximizing the transmitter performance. This box is shown as the shaded box in Figure 3.

The convex hull is computed because it has been demonstrated that one of the edges of the convex hull will coincide with one edge of the oriented bounding box. An example of this method is shown in Figures 2 a and b for the case of a NRZ-QPSK constellation with a pre-dispersion of + 150 ps/nm sampled at 2 Samples per Symbol. We find that a rotation of 14 ° in the counter clockwise direction should be applied to the constellation to minimize its PAPR and increase the performance of the transmitter with a gain in SNR_q of + 1.5 dB (see below for the definition of SNR_q).

Figure 2a schematically shows a convex-hull of an arbitrary set of points using the "elastic-band analogy". Figure 2b shows the convex hull (green dashed line) of a NRZ-QPSK constellation with a pre-dispersion of + 150 ps/nm sampled at 2 Samples per Symbol. Figure 2c shows a NRZ-QPSK constellation with a pre-dispersion of + 150 ps/nm without application of the pre-rotation (blue points) and with application of the pre-rotation (orange points). The red squares are the corresponding oriented minimum bounding boxes.

Figure 3 shows the different oriented bounding boxes for an example complex hull, the shaded box being the one selected having the minimum area.

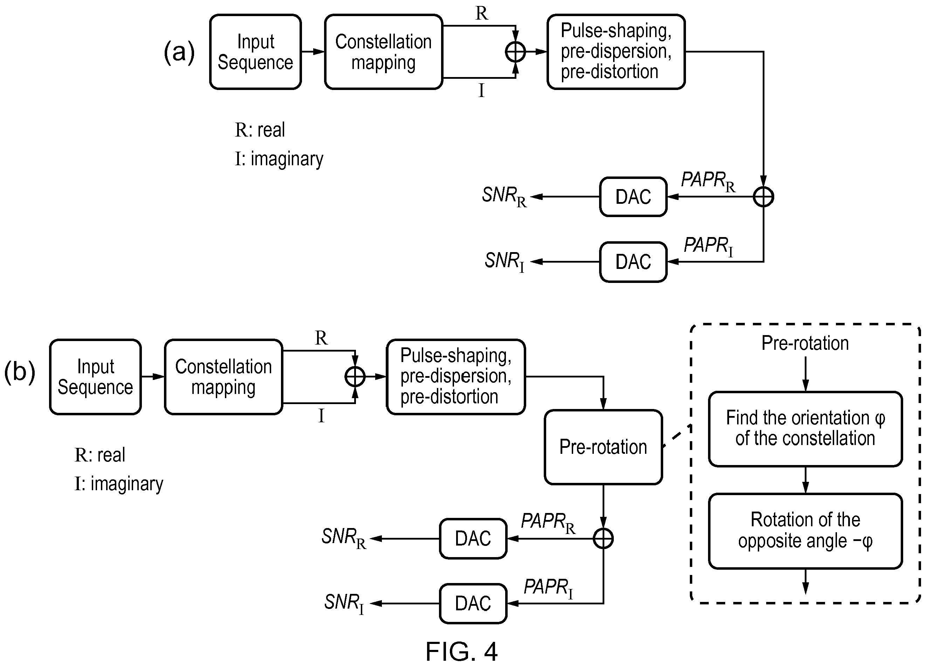

Figure 4a shows the structure of a conventional transmitter from data generation to DACs outputs. Fig. 4b shows the structure of a transmitter according to an embodiment comprising the phase shift pre-rotation module of an embodiment.

In this embodiment the pre-rotator is placed immediately after pre-treatment, which in this example comprises pulse-shaping, pre-dispersion and pre-distortion, and just before the quantization process of the DACs. The pre-treatments specified above are simply examples and any treatment of the signal that may tilt the constellation would benefit from the pre-rotation of an embodiment.

In the following analysis, we consider that the transmitter performance can be modelled by the relation:

$$1/SNR = 1/SNR\_q + 1/SNR\_e$$

Where SNR_q is the penalty introduced by quantization which is PAPR dependent and SNR_e contains the other penalties of the transmitter (noises, limited electronic bandwith...). SNR_q and the signal PAPR are linked by the relation:

$$SNR\_q = 6.02 \times N - 10.\log\_10 (PAPR) + 4.77$$

With $2^N$ being the number of quantization levels of the DAC. We report in the tables below the expected gain in SNR_q by pre-rotating the constellation for various signal configurations with different pre-dispersion values. See Table I for QPSK signals and Table II for 16QAM.

| Pre-dispersion [ps/nm] | Angle [°] | Gain SNRq [dB] |
|---|---|---|
| 100 | 22° | 0,84 |
| 200 | 42° | 0,75 |
| 250 | 43° | 1,34 |
| 300 | 45° | 1,07 |

Table 1. Pre-rotation angle and gain in $SNR_q$ obtained with the pre-rotation algorithm in the case of a QPSK constellation filtered with a root-raised-cosine filter of rolloff 0.4 for various pre-dispersion values (numerical simulations).

| Pre-dispersion [ps/nm] | Angle [°] | Gain in SNRq [dB] |
|---|---|---|
| 100 | 21° | 0,84 |
| 125 | 25° | 0,54 |
| 150 | 30° | 0,4 |
| 200 | 38,6° | 0,75 |
| 250 | 44° | 1,34 |
| 300 | 50° | 1,07 |

Table 2. Pre-rotation angle and gain in $SNR_q$ obtained with the pre-rotation algorithm in the case of a 16-QAM constellation filtered with a root-raised-cosine filter of rolloff 0.4 for various pre-dispersion values (numerical simulations).

When SNR_q is the limiting factor in the transmitter performance, which is the case when other distortions are small or the DAC resolution is low, the expected gain in SNR_q obtained by pre-rotation is highly significant, up to 1.5 dB.

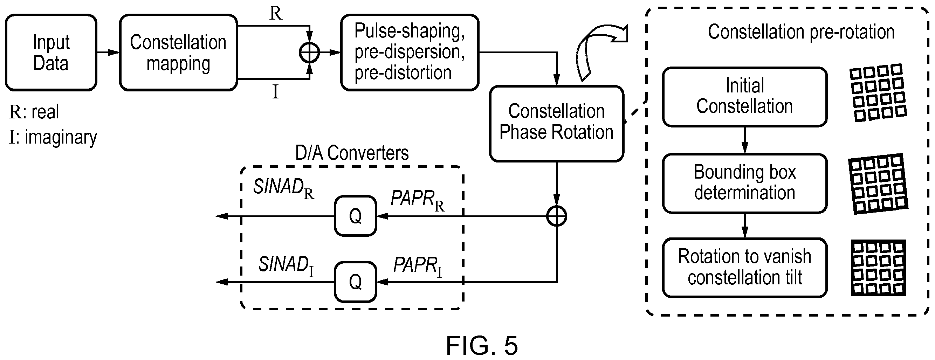

A further embodiment of a transmitter for each polarization of the optical field is depicted in Fig. 5. Formally, the PAPR of real and imaginary components could be considered separately. However, it is observed in simulations that the PAPRs are on average equal for the two components. This seems to result from the invariance by real/imaginary axes inversion of the considered constellations. To minimize the PAPR at the DAC input a constellation phase rotation after the pre-distortions (pulse-shaping, pre-emphasis, CD pre-compensation) and before the DAC is applied. The constellation phase rotation works in two steps as depicted in Fig. 5. First, the OMBB (oriented minimum bounding box) of the constellation is computed. Secondly, a constellation phase rotation to align the OMBB edges with respect to the constellation plane axes is performed.

To perform fast computation of the OMBB an initial step is performed where the convex hull of the constellation points is computed. It has been demonstrated that one of the edges of the convex hull necessarily contains one edge of the OMBB, thereby reducing its computation complexity. Secondly, we compute for each edge of the convex hull the corresponding bounding box and we choose the one of minimum area, which is the OMBB, as depicted in Fig. 3. The technique uses the fact that the OMBB is rotated with respect to the constellation planes axes by an angle which is precisely the rotation angle to minimize the PAPR.

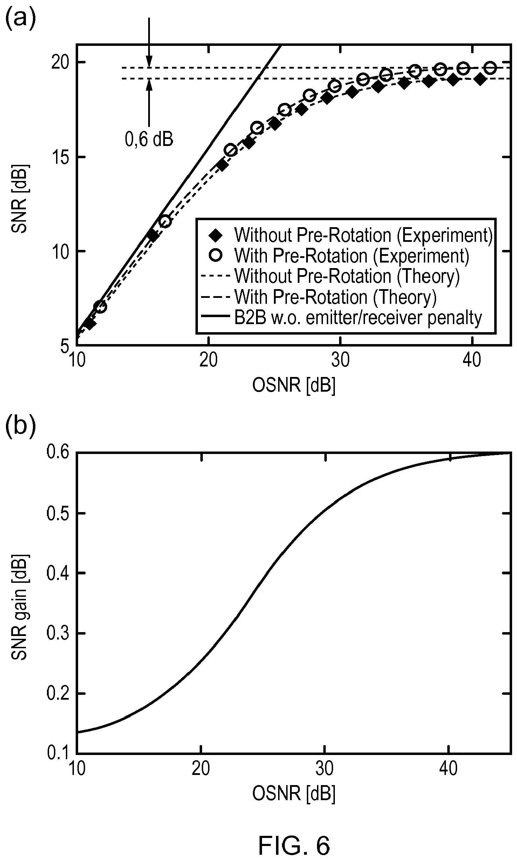

The efficiency of the pre-rotation algorithm has been demonstrated using a back-to-back transmission carrying a polarization-division-multiplexed QPSK signal at 32.5 GBaud. The signal is pulse shaped by a root-raised-cosine filter with a rolloff factor of 0.4 and pre-dispersed at + 200 ps/nm. Each symbol of the sequence is sampled at 2.5 samples per symbol and quantized by a DAC with 16 quantization levels (N = 4). The constellation has an oriented bounding box tilted of 39 ° in the clockwise direction relative to the axes of the constellation plane. From numerical simulation we expect a gain in SNR_q of + 0.75 dB. The total SNR after coherent detection and digital signal processing is measured in the case in which the pre-rotation algorithm is applied (red data in Fig. 6a) and in the case in which the pre-rotation algorithm is not applied (blue data in Fig. 6b). Fig. 6a shows that the pre-rotation algorithm enables a gain in the total SNR of + 0.6 dB in the high optical-signal-to-noise-ratio (OSNR) region in which the transmitter limits the performance. Fig. 6b shows the gain in total SNR for other values of OSNR.

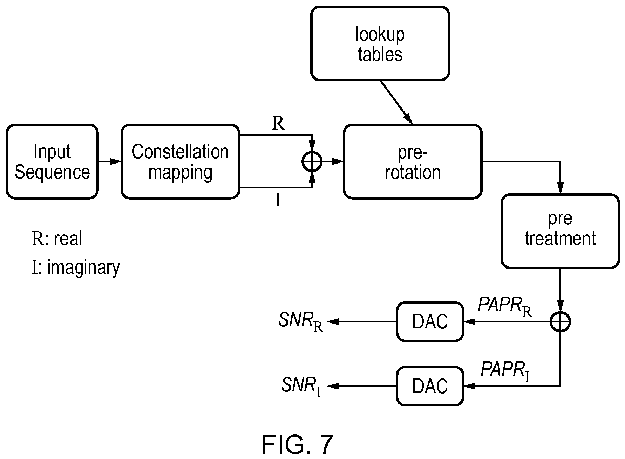

Figure 7 shows an alternative embodiment of data processing circuitry within a transmitter according to an embodiment. This embodiment is similar to the embodiment of Figure 4, however, in this embodiment the pre-rotation module is located before the pre-treatment module(s). The angle of pre-rotation is determined from lookup tables which store rotation or phase shift angles alongside constellation mapping and pre-treatment techniques to which they relate. Changes in the pre-treatment and/or constellation mapping techniques trigger the pre-rotation module to update its phase shift angle by referring to the lookup tables for a new angle related to the new processing. The lookup table is populated in response to calibration experiments performed using the constellation mapping and pre-treatment techniques that the transmitter is configured to use. As the rotation or phase shift angle is determined in advance rather than in on the fly, the pre-rotation module may be at any point between the constellation mapping module and the DACs.

In summary, embodiments enable an increase in SNR/Tx and thus an increase in the reach of the optical links while limiting the number of regenerators. Alternatively and/or additionally, the enhanced SNR/Tx can be used to transmit more capacity on the link.

The advantages of embodiments over the conventional transmitter are:

An insensitivity to the modulation format because the phase shift applies to any constellation geometry and does not depends on the field properties (frequency, amplitude, phase...).

An insensitivity to the resolution of the DAC. This is because the PAPR contribution SNRq due to quantization in the transmitter performance SNR/Tx does not depends on the resolution of the DAC.

An improvement of SNR/Tx whatever the input signals. To the best of the inventors' knowledge there is no situation in which the pre-rotation degrades the SNR/Tx.

An implementation that concerns only the transmitter and does not require corresponding changes to be made at the receiver.

Moreover embodiments do not need dynamic implementation because an update and corresponding determining of the optimal pre-rotation angle is only required when the pre-treatments such as pulse-shaping/pre-dispersion/pre-distortion are modified. This may be done each time the network is reconfigured. The receiver and the DSP algorithms are totally transparent to the pre-rotation.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. Phase shift circuitry for applying a phase shift to a data signal prior to said signal being converted to an analogue signal and sent to a transmission system to be transmitted as an analogue communication signal, said data signal undergoing constellation mapping and pre-treatment prior to being converted to said analogue signal, said phase shift circuitry comprising:

   an input for receiving said data signal, said data signal having undergone constellation mapping;
   determining logic operable to determine a global phase shift to be applied to said constellation mapped data signal to mitigate for any phase shift caused by said pre-treatment; and
   global phase shift circuitry configured to apply said determined global phase shift to said constellation mapped data signal.

2. Phase shift circuitry according to claim 1, wherein said constellation mapped data signal comprises both real and imaginary components and said determining logic is operable to determine an orientation of a constellation of said constellation mapped data signal in the complex plane that minimises a maximum value of both the real and imaginary components of said constellation following pre-treatment, and to determine a constellation phase rotation angle of said constellation to achieve said orientation as said global phase shift to be applied to said constellation mapped data signal.

3. Phase shift circuitry according to claim 2, wherein said determining logic is operable to:

   generate at least one rectangle in said complex plane containing said constellation;
   select one of said at least one rectangles with a smallest area; and
   determine said constellation phase rotation angle as an angle of rotation of said rectangle such that a maximum combined value of the real and imaginary components is minimised.

4. Phase shift circuitry according to claim 3, wherein said step of generating and selecting said at least one rectangle is performed by computing the convex hull of points of said constellation and for each edge of said convex hull determining the rectangle comprising said edge and containing said points and selecting said rectangle with the smallest area using an oriented bounding box algorithm.

5. Phase shift circuitry according to claim 3 or 4, wherein said rectangle comprises a square and said constellation mapped signal is mapped to points within a square in said complex plane, and determining said constellation phase rotation angle as an angle of rotation of said square is performed such that axes of said square align with axes of said complex plane.

6. Phase shift circuitry according to any preceding claim, wherein said determining logic is operable to determine an updated global phase shift in response to detecting a change in at least one of said constellation mapping and said pre-treatment.

7. Phase shift circuitry according to claim 1, wherein said determining logic comprises a data store for storing a lookup table said lookup table comprising at least two sets of constellation mappings and associated pre-treatments and corresponding global phase shifts to be applied when said corresponding constellation mappings and associated pre-treatments are used.

8. Phase shift circuitry according to any preceding claim, wherein said pre-treatment of said signal is to compensate for imperfections in said transmission system and comprises at least one of pre-distortion, chromatic dispersion pre-compensation or pre-dispersion, non-linear pre-compensation and pulse shaping of said signal.

9. Data signal processing circuitry for processing data signals prior to said signals being sent to a transmission system to be transmitted as a digital communication signal, said data signal processing circuitry comprising:

   an input for receiving said data signal;
   constellation mapping circuitry for mapping said data signal to a constellation of points in a complex plane;
   pre-treatment circuitry for pre-treating said data signal to compensate for imperfections in said transmission system;
   phase shift circuitry according to any preceding claim; and
   digital to analogue conversion circuitry.

10. Data signal processing circuitry according to claim 9, wherein said phase shift circuitry is arranged to receive data that has been pre-treated by said pre-treatment circuitry.

11. A method of determining a global phase shift to apply to a data signal prior to said data signal being converted from a digital to an analogue signal and sent to a transmission system for transmission as an analogue communication signal, said data signal undergoing constellation mapping and pre-treatment prior to transmission said method comprising:

   determining an orientation of a constellation of said constellation mapped data signal that minimises a maximum value of both real and imaginary components of said constellation mapped data following pre-treatment; and determining a constellation phase rotation angle of said constellation to achieve said orientation as said global phase shift to be applied to said constellation mapped data signal.

12. A method according to claim 11, wherein said determining said orientation of said constellation mapped data signal comprises:

generating at least one rectangle in a complex plane containing said constellation mapped pre-treated data; and selecting one of said at least one rectangles with a smallest area; and

said step of determining said constellation phase rotation angle comprises determining an angle of rotation of said rectangle such that a maximum combined value of the real and imaginary components is minimised.

13. A method according to claim 12, wherein said step of generating and selecting said at least one rectangle is performed by computing the convex hull of points of said data sample and for each edge of said convex hull determining the rectangle comprising said edge containing said points and selecting said box with the smallest area using an oriented bounding box algorithm.

14. A method according to claim 12 or 13, wherein said rectangle comprises a square and said constellation mapped signal is mapped to points within a square in said complex plane, and said step of determining said constellation phase rotation angle comprises determining an angle of rotation of said square such that axes of said square align with axes of said complex plane.

15. A computer program which when executed by a data processor is operable to control said data processor to perform a method according to any one of claims 11 to 14.

High max.
values

Imaginary

Real

Low max. values

Imaginary

Real

FIG. 1

(a)

(b)

(c)

FIG. 2

- - - Convex hull boundary
—— Oriented bounding boxes

Minimum area = OMBB

FIG. 3

FIG. 4

FIG. 5

FIG. 6

R: real
I: imaginary

FIG. 7

Europäisches
Patentamt

European
Patent Office

Office européen
des brevets

# EUROPEAN SEARCH REPORT

Application Number

EP 17 30 5469

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/114242 A1 (PROVIGENT LTD [IL]; FRIEDMANN JONATHAN [IL]; RAVID RAFI [IL]) 22 September 2011 (2011-09-22) * page 7, lines 31-34 * | 1-15 | INV. H04L27/34 H04L27/36 |
| X | WO 2011/093834 A1 (UNIV ILLINOIS [US]; JONES DOUGLAS L [US]; TSILIGKARIDIS THEODOROS) 4 August 2011 (2011-08-04) * claims 1-5 * | 1,9-11, 15 | |
| X | BO TIANWAI ET AL: "Common phase error estimation for coherent optical OFDM system using best-fit bounding box", 2015 INTERNATIONAL CONFERENCE ON PHOTONICS IN SWITCHING (PS), IEEE, 22 September 2015 (2015-09-22), pages 327-329, XP032799099, DOI: 10.1109/PS.2015.7329042 [retrieved on 2015-11-13] * the whole document * | 3-8, 12-14 | |
| X | TIANWAI BO ET AL: "Image processing based common phase estimation for coherent optical orthogonal frequency division multiplexing system", 2015 OPTICAL FIBER COMMUNICATIONS CONFERENCE AND EXHIBITION (OFC), OSA, 22 March 2015 (2015-03-22), pages 1-3, XP032784700, DOI: 10.1364/OFC.2015.W1E.8 [retrieved on 2015-06-10] * the whole document * | 3-8, 12-14 | TECHNICAL FIELDS SEARCHED (IPC) H04L |

The present search report has been drawn up for all claims

| Place of search | Date of completion of the search | Examiner |
|---|---|---|
| Munich | 21 September 2017 | Belloni, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 5469

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2017

| Patent document cited in search report | | Publication date | Patent family member(s) | | Publication date |
|---|---|---|---|---|---|
| WO 2011114242 | A1 | 22-09-2011 | US | 7990298 B1 | 02-08-2011 |
| | | | WO | 2011114242 A1 | 22-09-2011 |
| WO 2011093834 | A1 | 04-08-2011 | NONE | | |

EPO FORM P0459

For more details about this annex : see Official Journal of the European Patent Office, No. 12/82